Europäisches Patentamt

European Patent Office

Office européen des brevets

(11) Publication number: **0 246 831**
**A2**

# EUROPEAN PATENT APPLICATION

(21) Application number: **87304350.9**

(51) Int. Cl.⁴: **A01K 1/01**

(22) Date of filing: **15.05.87**

(30) Priority: **16.05.86 US 864152**

(43) Date of publication of application:
**25.11.87 Bulletin 87/48**

(84) Designated Contracting States:
**AT BE CH DE ES FR GB IT LI LU NL SE**

(71) Applicant: **Martin, James L**
**Poplar & McKinley**
**Stonefort Illinois 62987(US)**

Applicant: **Jackson, Albert R.**
**707 S. Bentley**
**Marion Illinois 62959(US)**

(72) Inventor: **Martin, James L**
**Poplar & McKinley**
**Stonefort Illinois 62987(US)**
Inventor: **Jackson, Albert R.**
**707 S. Bentley**
**Marion Illinois 62959(US)**

(74) Representative: **Pratt, David Martin et al**
**Brookes & Martin High Holborn House 52/54**
**High Holborn**
**London. WC1V 6SE(GB)**

(54) **Disposable bag dispensing container for animal litter.**

(57) A prepacked disposable animal litter and waste container has a carton (10) containing a plurality of vertically-superposed membranous bags (20). Each bag (20) is partially filled with an absorbent litter (22). The bags (20) may be each successively exposed for use, following usage of an uppermost exposed bag. The side walls (12, 14) of the carton (10) have flaps (12', 14') which extend the container sides vertically; and, together with the bags (20) create an impermeable membranous cover for the container's interior and exterior when the container is in use. Adhesive means (18') placed around the side walls (12, 14) secures the flaps (12', 14') and an overlying bag top. The bags (20), together with the flaps (12', 14'), each form a temporary repository for the litter (22) and animal waste prior to disposal.

FIG. 3

## DISPOSABLE BAG DISPENSING CONTAINER FOR ANIMAL LITTER

This invention relates to a disposable bag dispensing container for animal litter and waste, and in particular to a cat litter container.

Known animal litter containers are of the type in which dispensing cartons or plastic containers are partially filled with a litter absorbent material.

The present invention provides a disposable bag dispensing container for animal litter and waste, the container comprising a disposable, substantially rigid carton having a top, a base and a side wall, the side wall having a compressible flap joining the top to the side wall, the flap being depressibly disposed with respect to the side wall, a plurality of vertically-superposed flexible bags containing a measure of comminuted litter absorbent substance in at least sufficient quantity to cover an area equivalent to the horizontal cross-section of the carton, the free ends of the bags being successively openable and engageable and disengageable with the flap and the side wall of the carton, and adhesive means on the side wall of the carton whereby to secure the flap and a flexible bag relative to the side wall.

This container constitutes a disposable animal litter box which contains multiple layers of contained absorbent, wherein two or more successive, partially-filled bags are set within a cardboard box (the rigid carton) in superposed arrangement. Thus, as one bag is used and subsequently discarded, its removal uncovers a succeeding disposable bag having another measure of the animal litter absorbent within. One of the desirable features of the invention resides in its sanitary utility and convenient hands-off disposability, as required. The carton is protected against exterior contamination by the interior of each successive bag as it is opened and secured for use. Clearly the carton, which gives form to the partially filled bags, may be used over and over again, but its primary function is as plural bag container and shipping element.

A cat litter box constructed in accordance to the invention will now be described, by way of example, with reference to the accompanying drawings, in which:-

Figure I is a perspective view, partially broken away, of the box in its closed (out-of-use) configuration;

Figure 2 is a perspective view of the box in its in-use configuration;

Figure 3 is a part-sectional perspective view of the box in the in-use configuration, the forward portion being a cross-section taken on the line 3-3 of Figure 2;

Figure 4 is a cross-section taken on the line 4-4 of Figure 3; and

Figure 5 is a part-sectional perspective view showing an alternative embodiment of the invention shown in Figure 3.

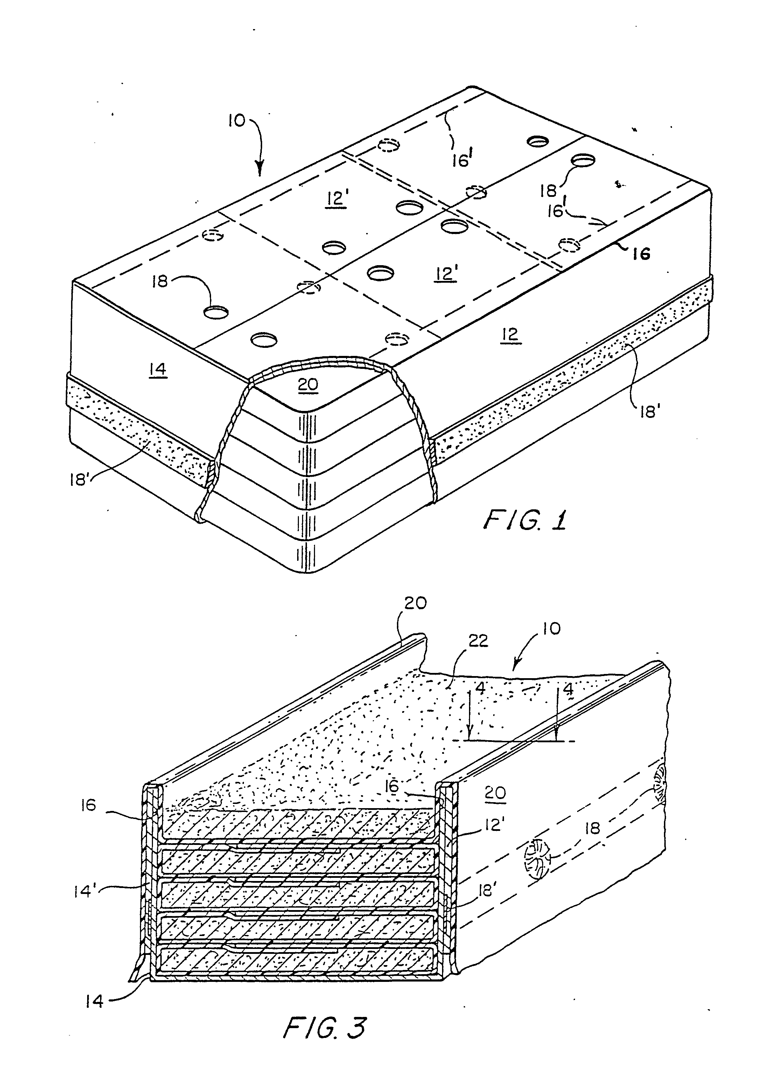

Referring to the drawings, Figure I shows a disposable rigid carton IO which is rectangular in configuration. The carton IO is made of cardboard, and has side walls I2 with flaps I2', and end walls I4 with flaps I4' The flaps I2' and I4' are each provided with a longitudinal serrations I6 at the end thereof which connects that flap to the associated wall I2 or I4. Each of the flaps I2' and I4' is also provided with serrations I6' which, together with serrations I6, define elongations which vertically extend the side and end walls I2 and I4 of the carton IO upon disassembly thereof in the in-use configuration (see Figure 2). All the flaps I2' and I4' are provided with cut-out apertures I8 adjacent their free ends, these apertures providing access to a double-sided adhesive strip I8' which extends transversely right round the external walls of the carton IO. A removable protective tape (not shown) is superposed upon the adhesive during display and/or shipping. Its removal before use of the container is essential.

The carton IO contains a plurality of disposable bags 20, each of which contains sufficient comminuted litter 22 to cover the cross-sectional area of the carton to a reasonable depth. The placement of the adhesive strip I8' behind the cut-out apertures I8 allows a bag top to be pulled down around the carton's exterior and adjusted without premature attachment to the exposed adhesive taking place. Moreover, when the bag top is in place, the positioning of the adhesive strip I8' permits the bag to be pressed directly over the cut-outs I8, whereby the bag can be secured resulting a complete protective bag membrane for the exterior of the carton IO.

Figure 2 illustrates the flaps I2' and I4' in their fully-opened state, and Figure 3 illustrates the same in fully-opened and adhesively-set position. Figure 3, then, depicts the operative or in-use mode, wherein an exposed topmost litter bag 20 is set so that the free end of the bag is adhesively held downwards against the weight of the closed and partially-filled end of the bag, holding the open end of the bag down as a membrane against the exposed flap portions I2' and I4' of the carton IO. The bag top excess depends below the flaps I2' and I4', whereby the holding action of the adhesive and the elastic tendency of the flaps to return to their flat position in packaging is restrained, resulting in a complete protective bag membrane for the exposed flap portions of the carton IO and the

carton itself. Removal of the bag 20 and its contaminate contents is easily undertaken by stripping the bag from the adhesive hold, and lifting the exposed bag and its contents from the carton 10.

In the multi-layered bag arrangement of Figures 1 and 3, the respective bags 20 which are not exposed for immediate use are appropriately folded and closed above the contained litter, beneath the topmost bag until such time as the topmost bag has been used and removed, thus exposing successively each of the other bags for sequential use as required. As shown in Figure 3, the lowermost layers of stacked bags 20, together with the topmost, comprise plurality of inserts for the bag-dispensing carton 10 itself. A horizontal cross-section of each bag 20 and contents (see Figure 3) would show that its configuration conforms in outline to the horizontal cross-section of the carton 10. Thus, as the carton 10 is of rectangular cross-section horizontally, so the bags 20 are of similar horizontal cross-section and of equivalent surface area in cross-section. The depth of litter in each bag 20 is a matter of choice in manufacture and/or market demand. Preferably, the carton 10 contains two or more bags 20. If the carton 10 were of circular, ovular or triangular horizontal cross-section, then the bag size would be of equivalent horizontal cross-section, with a variable depth characteristic.

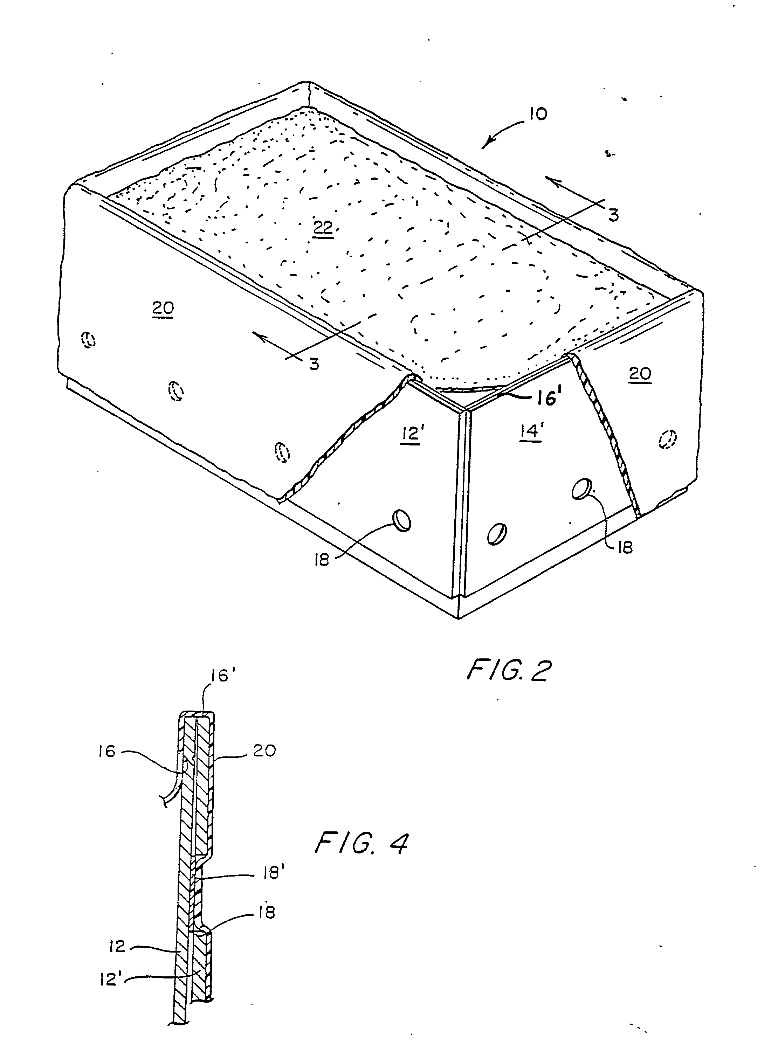

As will be noted from Figures 3 and 4, wherein the free end of the uppermost, exposed bag 20 is folded over the flaps 12' and 14' whereby the adhesive 18' is exposed through the holes 18 to engage and retain the bag top against the flaps, the flaps are secured to the carton 10 by the same adhesive 18'. The carton 10 is thus substantially encased within a protective outside member which, after use, reverts to its function as the interior of a bag 20. Thereafter, the bag 20 is made ready for removal and disposal with its contents.

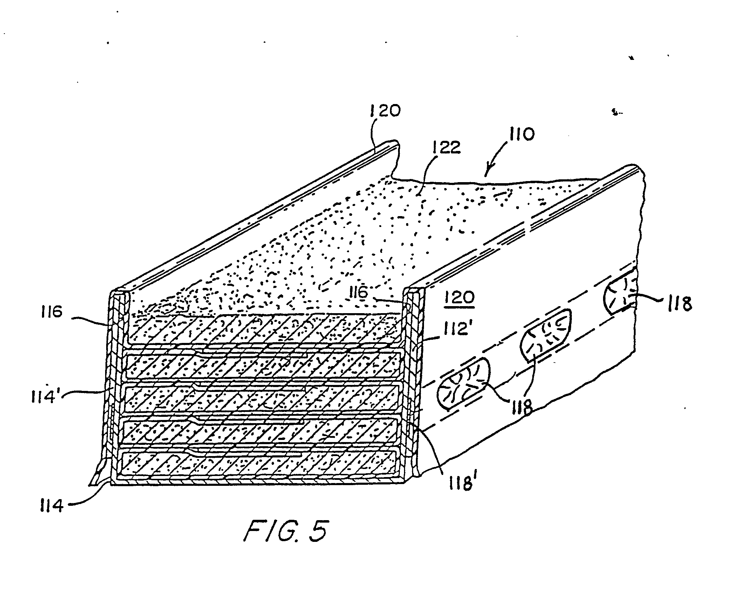

Figure 5 shows a modified embodiment of the invention. In Figure 5 the elements are numbered as in Figure 3 except that the reference numbers are preceded by the numeral "1". Thus, the free end top of the uppermost, exposed bag 120 is folded over the flaps 112' and 114', whereby the adhesive 118' is exposed through the flap apertures 118 to engage and retain the bag top against the respective flaps. However, the plurality of apertures 118 are horizontally elongated, resulting in a cylindrical configuration (although other elongate configurations, such as rectangular apertures, are well within the scope of this invention). These elongated access apertures 118 are especially advantageous to the consumer. In common practice, the consumer will locate the carton 110 in an area convenient to the animal, for example, on the floor or ground. In so doing, the apertures 118 are below the sight level, and the user must bend over or stoop to draw a bag 120 over the flaps 112' and 114' in the in-use configuration. Thus, in drawing the bag top 120 over the flaps 112' and 114', the consumer occasionally may experience difficulty in locating the apertures 118 to press and adhere the bag against the pressure-sensitive adhesive 118'. The elongate apertures 118 offer an increased surface area with which to contact the bag top 120 against the adhesive 118'. Especially advantageous though, is the fact that the elongate apertures 118 allow the user easily to locate tactilely the adhesive 118' by running the fingers laterally along the flaps 112' and 114' when the bag top is drawn over the flaps, and thereby engage the bag top against the adhesive by simply pressing inwardly.

Whereas it may not be apparent from reference to the drawings, the comminutes or absorbent granules 22 comprise heavy, porous sand-like grains such as are commonly used for cat litter. In addition to their normal function of waste containment, they serve to anchor the bags 20 against displacement in the carton 10, especially when exposed and the free and open end of the uppermost bag is drawn taut, by being folded over the flaps 12' and 14' and held down against the flaps by the adhesive 18'. Also the carton 10 may consist of any suitable disposable substance such as fibreboard, wood, rigid plastics material, and the bags 20 (so long as they are fluid impermeable) may be made of any suitable flexible material which is sufficiently cohesive to support the load of litter and absorbed waste. Various other means of temporarily securing the folded flaps 12' and 14' to the carton 10, and the exposed bag 20 to the flaps, may be employed in place of the adhesive strip 18'.

Thus, the cat litter box described above makes provision, in contrast with known devices which do not, for the containment of measured quantities of a litter absorbent substance confirmed within stacked, disposable bags 20 providing multiple layers of absorbent comminute material. Moreover, it comprises a package which, when opened, exposes the contents of each successive bag 20 for use whilst permitting ready disposability immediately and sequentially thereafter. The fibreboard carton 10 serves as a temporary housing for the litter bags 20 and contents prior to disposal; and, during use, the combination of the carton 10 and the exposed litter bag 20 are coactively enaged to form a substantially rigid, open cavity, the exterior of which is temporarily protected by an impermeable membrane.

Whereas the invention is specifically aimed at disposable animal litter utility and containment, the scope of invention is such as to encompass its utility with respect to variable absorbent comminute substances, irrespective of the species of animal defecating and/or urinating therein. Conceivably, the prepacked receptacle unit may be employed in any number of configurations which may be suitably adapted for in-place use to preformed confirned spaces such as cages and the like. For the purposes of illustration only, the receptacle container is represented in rectangular box-like configuration, as this is generally considered the most convenient three-dimensional form for stacking, storage, transport and the like.

## Claims

1. A disposable bag dispensing container for animal litter and waste, the container comprising a disposable, substantially rigid carton (l0) having a top, a base and a side wall (l2, l4), the side wall (l2, l4) having a compressible flap (l2', l4') joining the top to the side wall (l2, l4) a plurality of vertically-superposed flexible bags array (20) each containing a measure of comminute litter absorbent substance (22) in at least sufficient quantity to cover an area equivalent to a horizontal cross-section of the carton (l0), the free ends of the bags (20) being successively openable and engageable and disengageable with the flaps (l2', l4') and the side wall (l2, l4) of the carton (l0), and adhesive means (l8') on the side wall (l2, l4) of the carton (l0) whereby to secure the flap (l2', l4') and a flexible bag (20) relative to the side.

2. A container as claimed in claim l, wherein the carton (l0) is of rectangular horizontal cross-section having four side walls (l2, l4) and corresponding flaps (l2', l4'), each flap (l2', l4') being provided with cut-outs (l8) adjacent its free end to facilitate securing the flaps (l2', l4') and the exposed bag (20) to the side walls (l2, l4), and to facilitate subsequent removal of a used bag (20) and contents from the carton (l0).

3. A container as claimed in claim 2, wherein placement of adhesive (l8') behind the cut-out apertures (l8) allows bag top placement and adjustment without premature attachment of the bag (20) thereto.

4. A container as claimed in any one of claims l to 3, wherein the or each compressible flap (l2', l4') defines a foldable extension adjacent its connection with the respective side wall (l2, l4) of the carton (l0); whereby, upon extension and folding of the flap (l2', l4') outwardly, the flap (l2', l4') is attached to the respective side wall (l2, l4) and defines an extended perimeter to the side wall (l2, l4) to make the first layer of comminuted litter (22), when exposed for use, recessed downwardly from the top edge of the side wall (l2, l4), thereby helping prevent spillage during use as the bag (20) overlies the extension and the side wall (l2, l4) of the carton (l0).

*FIG. 1*

*FIG. 3*

FIG. 2

FIG. 4

FIG. 5